# EUROPÄISCHE PATENTSCHRIFT

(11) **EP 2 021 144 B1**
(45) Veröffentlichungstag und Bekanntmachung des Hinweises auf die Patenterteilung: **02.02.2011**
(21) Anmeldenummer: 07725504.0
(22) Anmeldetag: 24.05.2007
(51) Int. Cl.: B23C 3/06, B23P 15/00, B23P 13/00, B21H 7/18, C21D 7/08, B21D 3/08, B24B 5/42, B23P 9/02, B23P 23/04

(54) **VERFAHREN ZUM BEARBEITEN DER LAGERSITZE DER HAUPT- UND HUBLAGER VON KURBELWELLEN**
METHOD OF MACHINING THE BEARING SEATS OF THE MAIN AND ROD BEARINGS OF CRANKSHAFTS
PROCÉDÉ POUR USINER LES SIÈGES DE PALIER DU PALIER PRINCIPAL ET DU PALIER MOBILE DE VILEBREQUINS

(30) Priorität: 26.05.2006 DE 102006024715
(43) Veröffentlichungstag der Anmeldung: 11.02.2009
(73) Patentinhaber: NILES-SIMMONS Industrieanlagen GmbH, 09117 Chemnitz (DE)
(72) Erfinder: NAUMANN, Hans J., 09117 Chemnitz (DE)
(74) Vertreter: Grättinger Möhring von Poschinger Patentanwälte Partnerschaft
(86) Internationale Anmeldenummer: PCT/EP2007/004604
(87) Internationale Veröffentlichungsnummer: WO 2007/137762

(56) Entgegenhaltungen:
- EP-A1- 0 461 293
- EP-A1- 1 428 612
- EP-A2- 0 299 111
- WO-A-97/32680
- WO-A-2004/014600
- WO-A-2006/056460
- AT-B- 286 067
- DE-A1- 4 446 475
- DE-A1- 10 245 071
- DE-A1- 19 609 239
- DE-A1- 19 749 939
- DE-A1- 19 749 940
- DE-C- 212 950

## Beschreibung

Die Erfindung betrifft ein Verfahren zum Bearbeiten der Lagersitze der Haupt- und Hublager von Kurbelwellen, bei dem die Lagersitze der Haupt- und Hublager nach dem Urformen einer Kurbelwelle durch Schmieden oder Gießen mehreren Bearbeitungsoperationen unterzogen werden.

Herkömmlicherweise werden die Lagersitze der Haupt- und der Hublager von Kurbelwellen, mehrstufig spanabhebend bearbeitet. Gemäß einer insoweit typischen Bearbeitungsfolge werden die Lagersitze der geschmiedeten oder gegossenen Kurbelwelle zunächst durch Drehen, Fräsen oder Drehräumen vorbearbeitet, dann durch Schleifen zwischenbearbeitet und schließlich einer Finish-Bearbeitung unterzogen. Insbesondere um die Lagersitze im Laufe der weiteren Fertigung vor Beschädigungen zu schützen, umfaßt die Bearbeitung regelmäßig auch das Härten und anschließend daran das Schleifen, um die Lagersitze, nachdem diese gehärtet worden sind, auf ihr Endmaß zu bringen.

So beschreibt ein Firmenprospekt der Fa. Hegenscheidt, Erkelenz, aus dem Jahre 1983 mit dem Titel: "Technologie der Kurbelwellen - Bearbeitung zur Steigerung von Qualität und Lebensdauer" eine "Bearbeitungsfolge für 4-Zylinder, 5-fach gelagerte PKW Kurbelwellen" (nachfolgend wird dieses Dokument kurz als Do bezeichnet).

Die bekannte Bearbeitungsfolge umfasst 25 Operationen für die vollständige Bearbeitung einer Kurbelwelle (vgl. Do, Seiten 8 und 9). Nicht alle aufgeführten Bearbeitungsoperationen sind für die vorliegende Erfindung von Interesse. Von Interesse sind hier die Operationen 04, 05, 06, 09, 10, 11, 12, 13, 14 und 22 a. Die Operationen 04 bis 06 können unter den Begriff "Formen durch spanabhebende Bearbeitung mit bestimmter Schneide" subsumiert werden. Alternativ zu den Operationen 09 und 10, Härten und Entspannen, wird die Operation 22 a, Glattwalzen, angegeben; d. h. Verfestigen der nicht gehärteten Oberflächen der Lagersitze. Danach erfolgt in jedem Fall ein Fertigschleifen der Lagersitze der Haupt- und Hublager entsprechend den Operationen 13 und 14.

Wiederholt ist auch das Drehfräsen der Lagersitze von Kurbelwellen vorgeschlagen worden, beispielsweise in der DE 212950 und der AT 286067. Dabei wird jeweils ein Fingerfräser, der sich um eine auf der Achse des zu bearbeitenden Lagersitzes senkrecht stehende Achse dreht, mit tangentialem Vorschub an dem rotierenden Werkstück vorbeigeführt. In jüngerer Zeit sind solche Anregungen wieder aufgegriffen worden, insbesondere um den beim Schleifen anfallenden Schleifschlamm zu vermeiden.

So schlägt die WO 97/32680 A1 (nachfolgend wird dieses Dokument kurz als D1 bezeichnet) ein ohne Naßschleifen auskommendes Verfahren zur Bearbeitung der Lagersitze von Kurbelwellen vor, bei dem die Kurbelwelle mittels einer Aufnahmeeinrichtung, in welcher sie eingespannt und um ihre mit der C-Achse der Maschine zusammenfallende Längsachse drehbar antreibbar gelagert ist, mit ca. 20 bis 100 Umdrehungen pro Minute gedreht und mit einem Fräswerkzeug bearbeitet wird, welches in einer Werkzeugspindel um seine - zur X-Achse der Maschine parallele - A-Achse rotierbar, längs seiner X-Achse zum Werkstück hin zustellbar und senkrecht zu seiner X-Achse (in Y-Richtung der Maschine; tangential zum Werkstück) verschiebbar ist. Die entsprechende Bearbeitung erfolgt dabei in zwei Stufen.

Nach den Erläuterungen soll, um den unterschiedlichen Beanspruchungen des Schneidwerkzeugs und den zu erzielenden Qualitäten des Bearbeitungsvorgangs Rechnung zu tragen, die tangentiale Vorschubgeschwindigkeit so gesteuert werden, daß während der Vorbearbeitungsphase (Schruppen) die Umfangsschneiden des Fräswerkzeugs optimale Schnittbedingungen haben und während des Fertigbearbeitens (Schlichten) des Lagersitzes die Stirnscheiden den ganzen Lagersitz erfassen können (vgl. D1, Seite 11, Zeilen 11 bis 25). Durch entsprechend hohe Drehzahlen des Drehfräswerkzeugs können die beim High-Speed-Cutting erforderlichen hohen Schnittgeschwindigkeiten erreicht und die Kurbelwelle trotzdem mit der üblichen Drehzahl bis zu ca. 100 min⁻¹ gedreht werden, die auch beim Schleifen zur Erzielung der hohen Qualitäten des Werkstücks zum Einsatz kommt. Durch die hohen Schnittgeschwindigkeiten sei die Werkstückbeanspruchung klein und es lassen sich eine sehr gute Raumgeometrie erreichen. Bei auf die Kontur des Lagersitzes abgestimmtem Werkzeug ermögliche der tangentiale Vorschub des Drehfräswerkzeugs die Bearbeitung der gesamten Breite des Lagersitzes in einem Arbeitsgang. Die herkömmlichen Schritte der Vorbearbeitung und Schleifbearbeitung der Lagersitze könnten - in einer Maschine und mit einer Einspannung der Kurbelwelle - zu einem Arbeitsschritt zusammengefaßt und damit eine erhebliche Rationalisierung erreicht werden. An dem Fräswerkzeug sind drei aus gängigen Schneidstoffarten bestehende, jeweils eine stirnseitige und eine umfangsseitige Schneide aufweisende Schneidplatten vorgesehen. Die Schneidplattengeometrie ist der Geometrie des zu bearbeitenden Lagersitzes hinsichtlich Übergangsradius, Planschulter usw. angepaßt (vgl. D1 Seite 6, Zeile 33 bis Seite 7, Zeile 5).

Angesichts der Hubhöhe der Kurbelwelle muß das bekannte Drehfräswerkzeug sehr lang gestreckt sein (Auskraglänge), um die Bearbeitung des Lagersitzes vornehmen zu können (vgl. D1 Seite 8, Zeilen 18 bis 20).

Zusammenfassend werden in D1 ein Verfahren und eine Vorrichtung vorgeschlagen, die durch Verwendung des Hochgeschwindigkeitsdrehfräsens kurze Zykluszeiten und eine sehr gute Qualität bei der Bearbeitung der Lagersitze von Kurbelwellen erreichbar machen sollen, so daß auf den Bearbeitungsschritt des Schleifens ganz verzichtet werden könne (vgl. D1 Seite 15, Zeilen 22 bis 27). Es wird nur zwischen Automobil-Kurbelwellen, die geschmiedet oder gegossen sein können, und großen und schweren Kurbelwellen, beispielsweise für Schiffsmotoren, unterschieden (vgl. D1 Seite 1, Absätze 1 und 2, Seite 2, Absatz 2 und Seite 3, Absatz 1). Es bleibt offen, ob die so bezeichneten Kurbelwellen gehärtet sind oder irgendeine andere Art der Verfestigung der Oberfläche der Lagersitze erfahren haben. Der Fachmann weiß aber, dass zwischen der Bearbeitung von PKW-Kurbelwellen und Kurbelwellen für Schiffsmotoren große technologische Unterschiede bestehen. Somit darf bezweifelt werden, ob die Lehre von D1 uneingeschränkt auf alle Arten von Kurbelwellen übertragbar ist, ohne dass der Fachmann hier noch erfinderisch tätig werden muss.

Grob geschätzt sind an der Produktionsmenge von PKW-Kurbelwellen etwa 25 % ungehärtet. Bei etwa 50 % aller produzierten PKW-Kurbelwellen werden die Lagersitze gehärtet. Annähernd 25 % der produzierten PKW-Kurbelwellen haben auch gehärtete Übergänge zwischen Lagersitz und Kurbelwange oder gehärtete Einstiche.

Aus der EP 1 030 755 B1 (nachfolgend wird dieses Dokument kurz als D2 bezeichnet) ist das Bearbeiten von Kurbelwellen durch die Abfolge der Bearbeitungsschritte Spanen - Härten - Spanen - Finishen bekannt. Dazu wird ausgeführt, daß vor allem bei Stahlkurbelwellen die Flächen der Lagersitze in deren oberflächennahen Bereichen gehärtet werden. Dies dient einer erhöhten.Abriebfestigkeit der Lagersitze, einer Vorbeugung von Beschädigungen dieser Lagersitze beim Handling während des gesamten Herstellungsprozesses sowie der Beeinflussung der Festigkeitseigenschaften der Kurbelwelle (vgl. D2 Spalte 1, Zeilen 23 bis 30). Technischer Ausgangspunkt der Überlegungen von D2 ist das herkömmliche Bearbeiten von Kurbelwellen in vier Schritten: Der erste Schritt ist die spanende Bearbeitung mit bestimmter Schneide; in diesem Zusammenhang wird auch das Drehfräsen, insbesondere das Hochgeschwindigkeitsdrehfräsen genannt. Im nachfolgenden zweiten Bearbeitungsschritt werden die Lagersitze der Kurbelwelle gehärtet. Der dritte Schritt betrifft das Schleifen mittels eines harten, massiven Schleifwerkzeugs, beispielsweise einer Schleifscheibe. Im vierten Schritt schließlich erfolgt das Finishen durch ein in der Regel stillstehendes Schleifband oder Schleifstein, welches an den Außenumfang der rotierenden Lagersitze der Kurbelwelle angedrückt wird. Das abgetragenen Materialaufmaß bewegt sich beim Finishen im Bereich von 1 bis 10 µm (vgl. D2 Spalte 2, Zeile 32 bis Spalte 3, Zeile 15).

Um die Kosten bei der Kurbelwellenbearbeitung zu senken, wird nach D2 angestrebt, die Bearbeitung der Lagersitze von vier auf drei unterschiedliche Bearbeitungsschritte zu reduzieren (vgl. D2 Spalte 3, Zeile 21 bis 24). Durch das Weglassen der Schleifbearbeitung wird die Bearbeitungsfolge von vier auf nur drei prinzipiell unterschiedliche Bearbeitungsverfahren reduziert. Damit sollen nicht nur Entsorgungsprobleme bei der Beseitigung von Schleifschlamm wegfallen, sondern auch Investitionskosten für Schleifmaschinen, die Kosten für den Werkzeugverbrauch und nicht zuletzt der durch das Schleifen erhöhte Bestand an Werkstücken durch verlängerte Umlaufzeiten der Werkstücke. Demgegenüber sei die Entsorgung der Späne der spanenden Bearbeitung unproblematisch, da entweder (Hochgeschwindigkeitsfräsen) trocken geschnitten werde oder die Trennung Späne - Öl wegen der viel geringeren spezifischen Oberfläche der Späne gegenüber Schleifstaub vollständig möglich sei (vgl. D2 Spalte 4, Zeilen 21 bis 33).

Weiterhin müsse berücksichtigt werden, daß beim bisherigen Schleifen von Lagersitzen die aus der spanenden Vorbearbeitung resultierenden Rundheitsabweichungen durch das Schleifen in der Regel nur in ihrem A.bsolutwert reduziert würden, jedoch nicht in ihrer Charakteristik. Es würden also aus langwelligen Rundheitsabweichungen keine kurzwelligen Rundheitsabweichungen durch das Schleifen entstehen, sondern es würde die Anzahl der Wellentäler entweder beibehalten oder gar reduziert werden, mit der Folge, daß die weitere Verbesserung der Rundheitsabweichungen durch das Finishen, betrachtet in Ergebnisverbesserung pro Zeiteinheit, beim Finishen eher erschwert würde (vgl. D2 Spalte 7, Zeile 49 bis Spalte 8, Zeile 3). Nach dem Härten wird nach D2 nochmals eine Materialabnahme durch spanende Bearbeitung durchgeführt, insbesondere der zweite spanende Bearbeitungsschritt (Fertigspanen) eines zweistufigen Zerspanens (vgl. D2 Spalte 9, Zeilen 20 bis 24).

Den Aussagen in D1 und D2 ist demnach gemeinsam, die mehrstufige Drehfräsbearbeitung der Lagersitze durch Naßschleifen zu vermeiden. Damit könnten, wie dargelegt, auch bei gehärteten (vgl. D2) Lagersitzen die Qualität der Fertigung gesteigert und die Kosten gesenkt werden, die durch Beseitigen des Schleifschlammes anfallen. Die einhellige bekannte Auffassung geht infolge dessen dahin, die mehrstufige Drehfräsbearbeitung in die Vorbearbeitung zu integrieren. Gegen diese Auffassung spricht auch nicht, daß als mögliche Kombination von Bearbeitungsfolgen bis zum verwendungsfähigen Zustand einer Kurbelwelle genannt wird: Spanen - Härten - Spanen - Finishen (vgl. D2 Spalte 4, Zeilen 50 bis 54).

Auch die deutsche Patentschrift 4446475 (nachfolgend wird dieses Dokument kurz als D9 bezeichnet) betrifft ein Verfahren zum Bearbeiten der Lagersitze der Hauptlager und der Hublager von Kurbelwellen, wobei ohne daß dies in den Entgegenhaltungen ausdrücklich ausgeführt wird, davon ausgegangen werden kann, daß dem Bearbeiten der entsprechenden Lagersitze ein Umformen der Kurbelwelle durch Schmieden oder Gießen vorausgegangen ist. Dieses Dokument lehrt eine Drehfräs-Bearbeitung der Hublager; die Bearbeitung der Hauptlager der Kurbelwelle soll demgegenüber ausdrücklich nicht durch Drehfräsen erfolgen, sondern vielmehr durch Drehräumen oder Dreh-Drehräumen. Einer Drehfräs-Bearbeitung sollen nach der D9 ausdrücklich nur die "exzentrischen Werkstückflächen", d.h. die Hublager unterzogen werden.

Die vorliegende Erfindung setzt an der Erkenntnis an, daß ausgehend von der strukturellen Komplexität von Kurbelwellen und anderen Wellen mit Lagersitzen, insbesondere mit exzentrischen Lagersitzen, eine Optimierung von Herstellungskosten und Arbeitsergebnis mit den bekannten Maßnahmen allein nicht erreicht werden kann. Sie hat sich die Aufgabe gestellt, ein Verfahren und eine Werkzeugmaschine zur Bearbeitung der Lagersitze von Haupt- und Hublagern von Kurbelwellen bereitzustellen, welches zu einer Fertigung von hochwertigen Kurbelwellen bei vergleichsweise geringen Kosten beitragen kann.

Erfindungsgemäß wird diese Aufgabe gelöst durch ein Verfahren zum Bearbeiten der Lagersitze der Haupt- und Hublager von Kurbelwellen, bei dem die Lagersitze nach dem Urformen der Kurbelwelle durch Schmieden oder Gießen den folgenden Bearbeitungsoperationen unterzogen werden:
- Formen durch spanabhebende Bearbeitung mit bestimmter Schneide,
- Festwalzen aller Hohlkehlen oder Einstiche der Haupt- und Hublager,
- Richtwalzen der Kurbelwelle,
- spanabhebende Feinbearbeitung mit einem Fingerfräser jeweils durch Hochgeschwindigkeits-
- Vorschnitt-Drehfräsen und
- Fertigschnitt-Drehfräsen und
- Glattwalzen der Lagersitze der Kurbelwelle nach dem Fertigschnitt-Drehfräsen,
zur Durchführung des Verfahrens gehört eine entsprechend eingerichtete Werkzeugmaschine
wobei das Vorschnitt-Drehfräsen und das Fertigschnitt-Drehfräsen während jeweils im wesentlichen einer vollständigen Umdrehung der Kurbelwelle ohne Längsvorschub und ohne tangentialen Vorschub des Fingerfräsers erfolgt.

Wird die Kurbelwelle zwischen dem Formen mit spanabhebender Schneide und dem Festwalzen der Hohlkehlen und Einstiche auch noch gehärtet, so erfolgt auch nach dem Härten der Lagersitze ein mehrstufiger Prozeß der spanabhebenden Bearbeitung mit bestimmter Schneide durch Drehfräsen mit einem Vorschnitt und einem Fertigschnitt, wobei sich jeweils während des betreffenden Umlaufs der Kurbelwelle, d.h. zwischen dem Anschnitt und dem Austritt des Fingerfräsers, die Lage des Fingerfräsers relativ zu der Achse des zu bearbeitenden Lagers nicht ändert. Aufgrund der Dichte bzw. der Härte des abzutragenden Materials und der Mehrstufigkeit der Drehfräs-Bearbeitung fallen nur relativ kleine, ausgeglühte Späne an, die trocken und problemlos zu entsorgen sind. Indem die Kurbelwelle während des Vorschnitt-Drehfräsens wie auch während des Fertigschnitt-Drehfräsens größenordnungsmäßig jeweils nur um etwa eine vollständige Umdrehung gedreht wird, was, wie weiter unten näher ausgeführt wird, ein Drehen der Kurbelwelle um etwa eineinhalb vollständige Umdrehungen einschließt, läßt sich die Drehfräsbearbeitung innerhalb minimaler Zeit durchführen.

Die Technologie des Glattwalzens ist eine spanlose O-berflächenfeinstbearbeitung für alle plastisch verformbaren metallischen Werkstoffe. Die Bearbeitung erfolgt mittels gehärteter, hochglanzpolierter Arbeitsrollen unter relativ niedrigem Anpressdruck an einen Lagersitz der rotierenden Kurbelwelle. Während des Glattwalzprozesses findet in der Randschicht des Werkstoffs eine plastische Umformung statt, wobei die Profilerhöhungen nach unten fließen und die Spitzen eingeebnet werden, bis eine teilweise oder totale Einebnung stattgefunden hat. Die Gefügestruktur vor und nach dem Glattwalzen zeigt deutlich, dass keine Überlappung stattfindet.

Die Vorteile der Glattwalztechnologie im Vergleich zu allen anderen Technologien zur Verbesserung der Oberflächenqualität an hochbeanspruchten Werkstücken sind:
- gleichmäßige Oberflächenbearbeitung,
- hoher Traganteil,
- niedrige Werkzeugkosten,
- hohe Werkzeugstandzeiten,
- Härtesteigerung in der Randschicht,
- Erhöhung der Torsionsfestigkeit und
- Erhöhung der Lebensdauer.

Die Technologie des Festwalzens ist ähnlich der Glattwalztechnologie, hat jedoch eine ganz andere Zielsetzung. Die unter Festwalzkraft angepressten Arbeitsrollen folgen der Kontur des Werkstücks. Bei Anwendung des Verfahrens im Einstich ist die Festwalzkraft der Rollen auf dem gesamten Umfang des zu bearbeitenden Durchmessers winkelabhängig zwischen vorwählbaren Minimal- und Maximaldrücken automatisch regelbar, und zwar innerhalb jeder Umdrehung der Kurbelwelle. Die Anzahl der Überwalzungen ist vorwählbar.

Die erreichte Steigerung der Dauerfestigkeit steht in Abhängigkeit von Werkstoff, Radiengröße, Walzkraft und der Anzahl der Überwalzungen der Einstiche.

Die Vorteile des Festwalzens bestehen in der
- Steigerung der Randschichthärte,
- Einbringung von Druckspannungen,
- Form der festzuwalzenden Geometrie entsprechend der Sollvorgabe.

Es gibt unterschiedliche Festwalzverfahren als da sind das
- Vorschubverfahren und das
- Einstechverfahren.

Beim Drehfräsen nach der vorliegenden Erfindung ist die Achse des Fingerfräsers gegenüber der Achse des zu bearbeitenden Lagersitzes um eine Exzentrizität versetzt, welche während der entsprechenden Bearbeitungsstufe, einschließlich der Phasen des Eintauchens und des Ausfahrens des Werkzeugs, beibehalten wird, d.h. konstant ist. Während des Drehfräsens erfolgt keine Vorschubbewegung des Fingerfräsers quer zu einer Längsachse, d.h. in Y-Richtung bzw. tangential zum Werkstück. Die Bearbeitungsgeschwindigkeit (relativer Vorschub) richtet sich allein nach der Umdrehungsgeschwindigkeit der Kurbelwelle und dem Radius des zu bearbeitenden Lagersitzes. Dabei werden beispielsweise folgende Bearbeitungsgeschwindigkeiten erreicht: Relativer Vorschub zwischen 200 mm/min und 9000 mm/min, bevorzugt zwischen etwa 600 mm/min und 1500 mm/min; Schnittgeschwindigkeit zwischen 60 m/min und 600 m/min, bevorzugt zwischen etwa 80 m/min und 180 m/min. Der Versatz der Achse des Fingerfräsers zur Achse des zu bearbeitenden Lagersitzes ist abhängig von der Lagergeometrie und entspricht dem 0,1- bis 0,25-fachen Wert, bevorzugt etwa dem 0,15- bis 0,2-fachen Wert des Durchmessers des Fingerfräsers. Durch die Exzentrizität des Fingerfräsers können die Stirnschneiden den kompletten Lagersitz überdecken. Die Exzentrizität kann zur Verringerung der Dynamik des Fräsprozesses (Schwingungsverhalten) optimiert werden. Die Fräsbearbeitung des Lagersitzes kann im Gleichlauf bzw. Gegenlauf bei Schneideneintritt erfolgen.

Gemäß einem besonderen Aspekt der vorliegenden Erfindung wird das Werkstück nach dem Vorschnitt-Drehfräsen in der ersten Bearbeitungsstufe vermessen und die Zustellung des Fräsers für das Fertigschnitt-Drehfräsen in der zweiten Bearbeitungs-stufe in Abhängigkeit vom Ergebnis dieser Messung ermittelt. Wichtig ist, dass für die Zwischenbearbeitung eines jeden Lagersitzes eine geeignete NC-Steuerung vorgesehen ist. Eine derartige Steuerung setzt das Vorhandensein von Messorganen und Messprogrammen voraus, mit welchen das Bearbeitungsergebnis unmittelbar erfasst und im NC-Programm der Maschine für die Bearbeitung der Lagersitze verwendet wird. Vorzugsweise wird nach dem Vorschnitt einer Zwischenbearbeitung der Durchmesser gemessen und anschließend die für das Endmaß genaue Zustellung als Fertigschnitt vorgenommen. Dabei wird die Oberflächengeometrie wie z.B. der Durchmesser, die Rundheit, die Rauheit und die Geradheit ermittelt und für die Zustellung in Verbindung mit einer Kompensationsstrategie genutzt. Die Messung erfolgt vorzugsweise mit einer berührungslosen Messeinrichtung. Nach einem ersten Schnitt wird über eine programmierbare NC-Achse eine oder mehrere Messeinrichtungen zur Messung der Haupt- und Hublager eingesetzt. Das Vermessen der Lagersitze nach dem Vorschnitt-Drehfräsen erfolgt dabei an der eingespannten Kurbelwelle, so dass sich das Vorschnitt-Drehfräsen, Vermessen und Fertigschnitt-Drehfräsen in unmittelbarer Abfolge vollzieht. Je nach den individuellen Gegebenheiten kann bei den einzelnen Stufen der Drehfräs-Bearbeitung der Lagersitze jeweils ein gleich großes oder aber ein unterschiedliches Aufmaß der Fläche des Lagersitzes abgetragen werden. Besonders günstig ist dabei regelmäßig der an zweiter Stelle genannte Fall, und zwar dergestalt, daß ein nach dem Härten bestehendes Aufmaß zu 60 bis 80%, bevorzugt zu etwa 65 bis 75%, während des Vorschnitt-Drehfräsens und der Rest während des Fertigschnitt-Drehfräsens abgetragen wird. Die Aufmassaufteilung zwischen der ersten und der zweiten Bearbeitungsstufe richtet sich nach dem Arbeitsergebnis der ersten Bearbeitungsstufe. Beim Drehfräsen ist ggfs. eine Mindestspandicke (z.B. 0,1 mm) einzuhalten. Zur Ermittlung der optimalen Aufteilung des insgesamt über die Drehfräsbearbeitung abzutragenden Aufmaßes auf die beiden Stufen der Drehfräsbearbeitung ist von Vorteil, die Lagersitze der Kurbelwelle in der vorstehend erläuterten Weise bereits vor dem Hochgeschwindigkeits-Vorschnitt-Drehfräsen zu vermessen.

Je nach den Anforderungen an die Oberflächengüte sowie anderen Randbedingungen wird sich an das Drehfräsen regelmäßig noch das Glattwalzen der Lagersitze anschließen. Unter Kostengesichtspunkten ist allerdings eine Verfahrensführung ohne Finishen besonders zu bevorzugen. Dies ist auch grundsätzlich realisierbar; denn die nach dem Fertigschnitt-Drehfräsen noch bestehenden Oberflächenunebenheiten verlaufen verfahrensbedingt nicht parallel, sondern vielmehr quer zur Bewegungsrichtung im Lagersitz. Damit werden sie im Betrieb schneller egalisiert, und die Gefahr, daß an ihnen der Schmierfilm örtlich abreißt, ist geringer als im Falle von im Lagersitz radial umlaufenden Riefen.

Gemäß einer anderen bevorzugten Weiterbildung der Erfindung weist die Zustellung des Fingerfräsers während des Eintauchens zu Beginn des Vorschnitt-Drehfräsens und zu Beginn des Fertigschnitt-Drehfräsens bezogen auf die Achse des Fingerfräsers jeweils allein eine axiale Komponente auf. Der Fingerfräser wird, mit anderen Worten,jeweils längs seiner Längsachse zugestellt und setzt radial auf das Werkstück auf, während die Kurbelwelle um einen bestimmten Betrag (s.u.) gedreht wird. Dies ist von Vorteil, um beim Eintauchen des Fingerfräsers in das abzutragende Material das Entstehen einer "Delle" zu verhindern. Indem auf diese Weise eine Dellenbildung vermieden wird, kann das vor dem Drehfräsen bestehende Aufmaß entsprechend gering ausfallen (z.B. nur 0,5 mm, d.h. r = 0,25 mm bis r = 0,15 mm), was sich günstig auf die Wirtschaftlichkeit des mehrstufigen Feindrehfräsens auswirkt. Als besonders günstig hat sich erwiesen, wenn sich das Eintauchen des Fingerfräsers in das abzutragende Material auf seine für das Vorschnitt-Drehfräsen maßgebliche Stellung über einen Drehwinkel der Kurbelwelle von etwa 3° bis 15°, bevorzugt etwa 5° erstreckt. Entsprechendes gilt für das Eintauchen des Fingerfräsers beim Fertigschnitt-Drehfräsen.

Um die optimale Rundheit im Zusammenspiel von Anschnitt und Austritt des Fingerfräsers zu erzielen, werden Schwankungen der Passivkraft über die Werkzeugspindel mit Hilfe von Sensor- und Aktortechnik kompensiert. Dabei werden die Wege der Werkzeugspindel im Xm Bereich vom ca. 10 bis 20 µm mit Piezo-Elementen korrigiert. Eine automatisierte Zustellungskorrektur mittels Kräftemessung und Lageregelung der X-Achse zur Verbesserung der Rundheit von feindrehgefrästen Lagersitzen geht von den Grundlagen aus, das Gleichgewicht der Passivkräfte Werkzeug/Werkstück während der Feindrehfräsbearbeitung herzustellen. Das erfolgt durch Kräftemessung in der Werkzeugspindel (axial zum Werkzeug) zur Bestimmung der Passivkraft. Eine relativ hohe Abtastrate (Samplingfrequenz) > 1kHz und rechnerische Auswertung zweier aufeinanderfolgender Messpunkte zur Bestimmung des positiven/negativen Anstiegs der Kraft (inkl. Zeitsignal Δt) ist notwendig. Ein schneller X-Achsantrieb ist erforderlich, der 10 bis 20 µm (in bekanntem Abstand zeitversetzt: Nlesstakt/Berechnungsakt/Verfahrtakt) ebenfalls >1kHz zum Beispiel durch Piezoelemente erzeugen kann.

Dahinter steht der Grundgedanke, dass, wenn sich die Passivkraft aufgrund von Härteschwankungen oder durch Veränderung des Spanungsquerschnitts (Ölbohrung) verändert, die Zustellung des Werkzeugs in X-Richtung entsprechend korrigiert werden soll. Bei genügend hoher Auflösung und Schnelligkeit des X-Achsantriebs innerhalb 10 bis 20 µm (Verfahr-Fenster) lässt sich sogar der Schwingungseinfluss durch Ein- und Austritt der Schneide erheblich reduzieren (Prinzip Gegenschwingung/Auslöschung der Wellenberge und Wellentäler).

Allerdings muss man dabei beachten, dass das System zum Überschwingen durch Passivkraftänderungen neigt, die durch die korrigierte Verfahrbewegung hervorgerufen werden können. Wenn zum Beispiel die Härte abnimmt, somit auch die Passivkraft abnimmt, sofern dabei in +X weg vom Werkstück "korrigiert" wird, nimmt die Passivkraft weiter ab und das System "schwingt sich auf".

Eine mögliche Lösung besteht darin, die Auswertung des Kraftsignals über längere Zeiträume bzw. durch Integralberechnung des gleitenden Mittelwerts und verzögerte Korrektur mit Pausen zwischen den Korrekturen vorzunehmen. Die höherfrequenten Schwingungen müssen trotzdem noch verringert werden.

Eine andere bevorzugte Weiterbildung der Erfindung zeichnet sich dadurch aus, daß der Schneiden-Durchmesser des zum Drehfräsen eingesetzten Fingerfräsers größer ist als die Breite des zu bearbeitenden Lagersitzes. Bevorzugt beträgt der Durchmesser des zum Drehfräsen verwendeten Fingerfräsers etwa den 1,15- bis 1,35-fachen Betrag der Breite des zu bearbeitenden Lagersitzes. In diesem Falle wird zweckmäßigerweise während des Vorformens beidseitig des zu erzeugenden Lagersitzes jeweils ein Freistich eingebracht, in welchem der Fräser bei der Drehfräsbearbeitung auslaufen kann. Bei Berücksichtigung dieser Parameter ergibt sich ein für die Aufrechterhaltung eines Schmiermittelfilms günstiger Verlauf des auf der Oberfläche der Lagersitze nach der Drehfräsbearbeitung verbleibenden Oberflächenprofils.

Bei der Bearbeitung der Lagersitze einer Kurbelwelle ist von Vorteil, wenn die Kurbelwelle für die mehrstufige Drehfräs-Bearbeitung auf der Seite ihres Flansches in einem ersten drehbaren Spannfutter und auf der Seite ihres Zapfens in einem zweiten drehbaren Spannfutter eingespannt wird. Bevorzugt sind dabei beide Spannfutter synchron antreibbar und drehen sich mit der Umlaufgeschwindigkeit zwischen 1 und 100 min⁻¹.

Die Lagersitze der einzelnen Hauptlager einer Kurbelwelle werden zweckmäßigerweise nacheinander mit einem einzigen Drehfräswerkzeug bearbeitet, während die Kurbelwelle bevorzugt gleichzeitig an mindestens einem benachbarten Hauptlager in radialer Richtung von einer bzw. von zwei Lünetten abgestützt wird. In entsprechender Weise werden die Lagersitze der einzelne Hublager zweckmäßigerweise nacheinander mit einem einzigen Drehfräswerkzeug bearbeitet, während die Kurbelwelle gleichzeitig an mindestens einem dem bearbeiteten Hublager benachbarten Hauptlager in radialer Richtung von einer Lünette abgestützt wird.

Durch die Lünettenabstützung wird vermieden, daß sich die Kurbelwelle unter den Bearbeitungskräften verbiegt und sich somit das Bearbeitungsergebnis verschlechtert.

Alternativ können jeweils mehrerer Haupt- oder Hublager mit mehreren Drehfräswerkzeugen gleichzeitig bearbeitet werden. Dabei ist eine entsprechende Mehrzahl von Drehfräswerkzeugen vorgesehen.

Besonders vorteilhaft ist es, wenn für die mehrstufige Drehfräsbearbeitung eines jeden Lagersitzes ein eigenes individuelles NC-Steuerungsprogramm abläuft. Eine derartige individuelle Steuerung setzt das Vorhandensein von Meßorganen und Meßprogrammen voraus, mit welchen das individuelle Bearbeitungsergebnis der Vorschnitt-Drehfräsbearbeitung unmittelbar erfaßt und im NC-Programm der Maschine für die Bearbeitung des betreffenden Lagersitzes während der Fertigschnitt-Drehfräsbearbeitung verwendet wird. Vorzugsweise wird, wie dargelegt, nach dem Vorschnitt der mehrstufigen Drehfräsbearbeitung gemessen und anschließend die Zustellung für den Fertigschnitt vorgenommen. Dank neuzeitlicher Entwicklungen ist eine derart komplexe NC-Steuerung der Bearbeitungsmaschine heutzutage ohne weiteres möglich.

Neben der einleitend beschriebenen Bearbeitung von Kurbelwellen für PKW-Motoren können in analoger Weise auch

Kurbelwellen für größere Motoren, z. B. Motoren für kleinere Schiffe, Panzer oder Lokomotiven bearbeitet werden. Ebenso ist die Bearbeitung von Nocken- oder Steuerwellen möglich.

Die Erfindung betrifft auch eine Werkzeugmaschine zur Durchführung des Verfahrens. Die Werkzeugmaschine besitzt:
- eine Hauptspindel mit einer Drehachse (C-Achse) um die Z-Achse, entsprechend der Hauptdrehachse einer zu bearbeitenden kurbelwelle,
- ein in der C-Achse drehbar antreibbares Spannfutter,
- wenigstens eine um die X-Achse rotierende Werkzeugspindel, die in der Y-Richtung und in der Z-Richtung verfahrbar und in der X-Richtung zustellbar ist,
- wenigstens eine entlang der Z-Richtung verfahrbare Lünette mit wenigstens einer Abstützung für die Kurbelwelle an einem ihrer Lagersitze,
- einen Reitstock mit einer Körnerspitze oder ein zweites Spannfutter.
- ein Einrichtung zum Festwalzen der Einstiche und Hohlkehlen und zum Richtwalzen von Kurbelwellen mit Hilfe von Festwalzwerkzeugen, sowie
- eine Einrichtung zum Glattwalzen der Lagersitze von Haupt- (HL) und Hublagern (PL).

Neben einer derartigen Maschine zur spanabhebenden Bearbeitung von Kurbelwellen sind gesonderte Maschinen oder Einrichtungen zum Festwalzen der Hohlkehlen oder Einstiche oder zum Glattwalzen der Lagersitze an den Haupt- und Hublagern von Kurbelwellen vorgesehen. Sofern derartige Einrichtungen nicht bereits an der Werkzeugmaschine für die spanabhebende Bearbeitung vorhanden sind oder daran angebracht werden können, ist vorgesehen, die Operationen des Festwalzens und des Glattwalzens auf dafür spezialisierten eigenständigen Maschinen innerhalb der Verkettung der Fertigungsoperationen vorzunehmen.

Beim Bearbeiten der Lagersitze einer Kurbelwelle in einer Maschine mit zwei drehbar antreibbaren Spannfuttern nimmt das erste Spannfutter die Kurbelwelle an deren Flansch und das zweite Spannfutter die Kurbelwelle an deren Zapfen auf. Als Spannfutter werden vorzugsweise Ausgleichsfutter mit Spitzenaufnahme eingesetzt.

Die Drehachse (A-Achse) der Werkzeugspindel mit dem Drehfräswerkzeug rotiert um die X-Achse orthogonal zur Arbeitsebene der Maschine. Die Werkzeugspindel für das Drehfräswerkzeug weist auch eine Einrichtung auf, um die Werkzeugspindel zur Einstellung einer Exzentrizität (des Versatzes) zwischen der Achse des zu bearbeitenden Lagersitzes und der Werkzeugachse in der Y-Richtung der Maschine einstellbar zu machen. Schließlich ist die Werkzeugspindel auch noch in der Z-Richtung der Werkzeugmaschine verfahr- und feststellbar, um die einzelnen Lagersitze nacheinander bearbeiten zu können.

Für die Bearbeitung der Flächen der Lagersitze von Hublagern weist die Werkzeugspindel eine Einrichtung auf, mit deren Hilfe sie koordiniert in Richtung der X-Achse oszillieren kann, so daß sie den Kreisbewegungen des Hublagers während der Drehung der Kurbelwelle um deren Hauptachse folgen kann. Eine zweite "überlagerte" X-Achse ist vorgesehen für Zustellungen bis zum Beispiel 10 µm mittels Piezoelementen. Dadurch wird auch eine Verringerung der Prozessdynamik möglich.

Die Werkzeugspindel ist bevorzugt zur Aufnahme eines Fingerfräsers vorgesehen, dessen Schaft eine Länge im Verhältnis zu seinem Durchmesser hat, die zwischen 10:1,5 bis 10:3 liegt. Diese Schlankheit des Fingerfräsers ist die Voraussetzung dafür, daß alle Flächen der Lagersitze (Mantelflächen) bei sich drehender Kurbelwelle mit dem Werkzeug bearbeitet werden können. Die Schlankheit setzt aber auch voraus, daß der Schaft des Fingerfräsers eine hohe Biegesteifigkeit aufweist. Vorteilhaft ist es, wenn der Schaft des Fingerfräsers aus Hartmetall - oder sonstigen Materialien mit hoher Begesteifigkeit - hergestellt ist. Die Einspannung der Fingerfräser erfolgt vorzugsweise in einem Schrumpffutter.

Um einen ruhigen und gleichmäßigen Schnitt zu erzielen, sind an dem Fingerfräser bevorzugt mindestens drei Stirnschneiden aus aufgelöteten oder anderweitig geeignet befestigten CBN-Schneidplatten (kubischkristallines Bornitrid) oder Schneidplatten aus einem anderen geeigneten Schneidstoff vorgesehen.

Die Stirnschneiden des Fingerfräsers weisen bevorzugt jeweils einen sehr geringen Anstellwinkel wischen 0,02° und 0,08° auf. Durch einen solchen Anstellwinkel lässt sich eine bei Kurbelwellen günstige konvexe (ballige) Form der Lagerflächen erreichen. Der durch schrägen Anschliff der stirnseitigen Werkzeugschneiden erzeugbare Anstellwinkel kann dabei insbesondere ca. 0,04° betragen. Das Werkzeug kann bei Bedarf innen gekühlt werden.

Eine bevorzugt vorzusehende Abstützung der jeweils nicht in Bearbeitung befindlichen Lagersitze durch eine Lünette (s.o.) erfolgt zweckmäßigerweise an drei Punkten eines Hauptlagers, von denen einer in der X-Richtung (gegenüber dem Drehfräswerkzeug) liegt. Um Störungen der Abstützung durch die notwendigen Ölbohrungen in den Haupt- und Hublagern auszuschließen, sind die Abstützflächen der Lünette bevorzugt als Gleitsteine ausgebildet, die im Bereich der Ölbohrungen der Hauptlagersitze jeweils eine Aussparung in Form einer Nut aufweisen können. Zusätzlich können die Gleitsteine der Oberflächenkontur der Mantellinie des Lagers angepaßt sein, insbesondere über einen auf den Lagerdurchmesser abgestimmten Hohlschliff. Dies dient der optimalen Abstützung durch Maximierung des Traganteils.

Die besonderen Vorteile der vorliegenden Erfindung zeigen sich, wie vorstehend ausgeführt, namentlich bei Kurbel- und sonstigen Wellen, deren Lagersitze gehärtet sind. Ist eine Härtung der Lagersitze allerdings weder im Hinblick auf deren Schutz während des weiteren Handlings noch im Hinblick auf die angestrebte Verschleißfestigkeit erforderlich, kommt in Betracht, das erfindungsgemäße Verfahren ohne Härtung der Lagersitze einzusetzen. In diesem Falle würden an die Schneiden des Drehfräswerkzeugs geringere Anforderungen gestellt werden. Zudem könnte, da der sich regelmäßig beim Härten einstellende Verzug entfällt, das Aufmaß für die Drehfräsbearbeitung geringer ausfallen als bei gehärteten Lagersitzen, was unter Gesichtspunkten der Fertigungsökonomie günstig ist.

Nachfolgend wird die Erfindung an einem Ausführungsbeispiel näher beschrieben.

Es zeigen jeweils in nicht maßstäblicher und teilweise stark vereinfachter Darstellung die
- Fig. 1: eine Vier-Zylinder-Kurbelwelle in der Seitenansicht,
- Fig. 2: einen zur Bearbeitung der Lagersitze der Kur- belwelle nach Fig. 1 einsetzbaren Fingerfrä- ser in der Seitenansicht in verkleinertem Maßstab,
- Fig. 3: den Fingerfräser der Fig. 2 in einer Drauf- sicht in Richtung des Pfeils A der Fig. 2 in vergrößertem Maßstab,
- Fig. 4: das stirnseitige Ende des Fingerfräsers in der Seitenansicht in vergrößertem Maßstab,
- Fig. 5: das Bearbeiten eines Hauptlagers der Kurbel- welle nach Fig. 1 im Schnitt,
- Fig. 6: in einer Vektordarstellung den relativen Vor- schub während unterschiedlicher Phasen der Drehfräsbearbeitung,
- Fig. 7: das Abstützen eines anderen Hauptlagers im Schnitt und
- Fig. 8: die Draufsicht auf einen Gleitstein der Lünet- te
- Fig. 9: eine Kurbelwelle in der Seitenansicht mit den bevorzugten Stellen für das Festwalzen
- Fig. 10: den Angriff eines Festwalzwerkzeugs an einem Hublagerzapfen
- Fig. 11: eine Kurbelwelle in der Seitenansicht mit den bevorzugten Stellen für das Glattwal- zen
- Fig. 12.: den Angriff eines Glattwalzwerkzeugs an einem Hublagerzapfen.

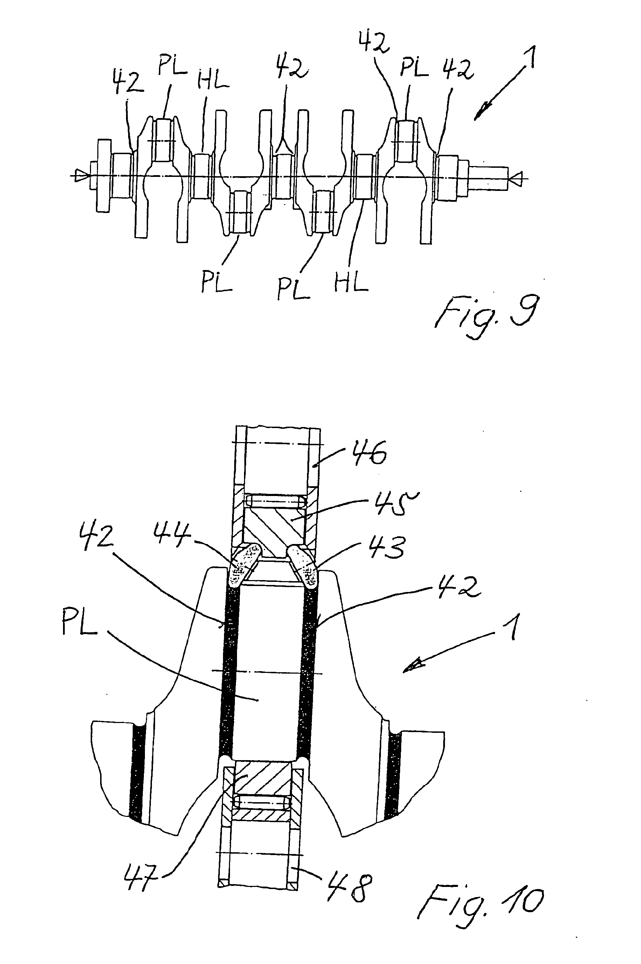

An der durch spanabhebende Bearbeitung mit bestimmter Schneide (vor-) geformten Kurbelwelle 1 werden - falls das vorgesehen ist - zunächst die Oberflächen aller Lagersitze und damit einhergehend zumeist auch die Übergänge - Hohlkehlen oder Einstiche - gehärtet. Unabhängig davon folgt als nächste Bearbeitungsoperation das Festwalzen aller Hohlkehlen oder Einstiche 42 (Fig. 9). Dabei werden zwei Festwalzrollen 43 und 44 unter einer vorgegebenen Festwalzkraft in die Einstiche 42 hineingedrückt, während die Kurbelwelle 1 gedreht wird. Die Festwalzrollen 43 und 44 werden während des Festwalzens von einer Führungsrolle 45, die in einem Festwalzrollenkopf 46 drehbar gelagert ist, abgestützt (Fig. 10). Gegenüber den Festwalzrollen 43 und 44 wird der Lagerzapfen PL von zwei Stützrollen 47 abgestützt, die in einem Stützrollenkopf 48 drehbar gelagert sind. Festwalzrollenkopf 46 und Stützrollenkopf 48 sind Teile eines Festwalzwerkzeugs (nicht gezeigt).

Erfindungsgemäß wird die Kurbelwelle nach dem Härten und/oder Festwalzen der Hohlkehlen oder Einstiche 42 gerichtet. Das Richten erfolgt mit denselben Festwalzwerkzeugen wie das Festwalzen allerdings unter Regelung der Festwalzkraft nach Größe und Richtung. Mit dem Festwalzen kann die Dauerfestigkeit von Kurbelwellen aus Stahl um 200% und von Kurbelwellen aus Sphäroguss um 300% gegenüber der ursprünglichen Dauerfestigkeit erhöht⁻ werden. Dies - spanabhebend vorgeformte, ungehärtete oder gehärtete fest- und richtgewalzte - Kurbelwelle 1 ist um ihre Hauptdrehachse 2 in einer Werkzeugmaschine (nicht gezeigt) drehbar eingespannt, in welcher die Lagersitze ihrer Haupt- und Hublager nunmehr durch Feindrehfräsen bearbeitet werden. Am Zapfen 3 beginnend sind die Hauptlager nacheinander als HL 1 bis HL 5 bezeichnet. Ähnlich ist die Zählung der Hublager, welche in der Zeichnung vom Zapfen 3 her beginnend nacheinander die Bezeichnungen PL 1 bis PL 4 tragen. Das dem Zapfen 3 gegenüberliegende Ende der Kurbelwelle 1 ist der Flansch 4. Im vorliegenden Beispiel wird die Kurbelwelle 1 am Flansch 4 und am Zapfen 3 von je einem Spannfutter gespannt, von dem jeweils zwei Spannbacken 5 dargestellt sind. Die Spannkräfte wirken entsprechend der Richtung der Pfeile 6 in radialer Richtung auf den Flansch 4.

Die Drehachse 2 der Kurbelwelle 1 ist zugleich die in Z-Richtung verlaufende C-Achse der Werkzeugmaschine. Beginnend am Flansch 4 werden nacheinander zunächst die Hauptlager HL 5 bis HL 1 der Kurbelwelle 1 gemäß dem Pfeil 9 durch Feindrehfräsen spanabhebend bearbeitet. Während der Bearbeitung in Richtung des Pfeils 9, -X-Richtung der Werkzeugmaschine, erfolgt das Abstützen der Kurbelwelle 1 in Richtung des der Bearbeitungsrichtung 9 entgegengesetzten Pfeils 10. Das Abstützen in Richtung des Pfeils 10 erfolgt durch eine oder zwei Lünetten (nicht gezeigt) der Werkzeugmaschine. Dabei erfolgt eine Bearbeitung von HL 5 bei Abstützung an HL 4, eine Bearbeitung von HL 4 bei Abstützung an HL 3, eine Bearbeitung von HL 3 bei Abstützung an HL 4 und/oder HL 2, eine Bearbeitung von HL 2 bei Abstützung an HL 3 und eine Bearbeitung von HL 1 bei Abstützung an HL 2. Ähnlich gestaltet sich das Abstützen bei der Bearbeitung der Hublager PL 1 bis PL 4. Bei einer Bearbeitung von PL 1, beispielsweise in der Bearbeitungsrichtung 11, erfolgt das Abstützen an HL 1 und/oder HL 2. Die Bearbeitung von PL 2 wiederum erfolgt bei Abstützung an HL 2 und/oder HL 3, die Bearbeitung von PL 3 bei Abstützung an HL 3 und/oder HL 4 und schließlich die Bearbeitung von PL 4 bei Abstützung an HL 4 und/oder HL 5. Der Einfachheit halber wird angenommen, daß die Bearbeitungsrichtung 11 der Bearbeitungsrichtung 9 und somit der -X-Richtung der Werkzeugmaschine entspricht.

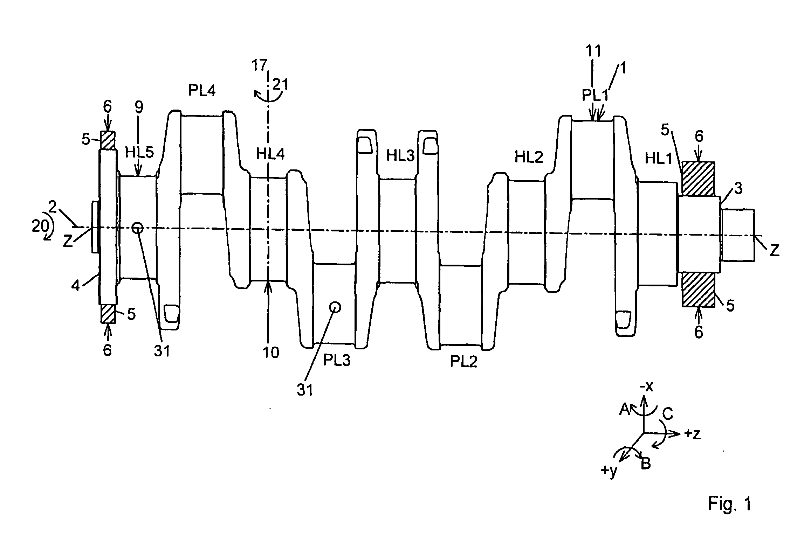

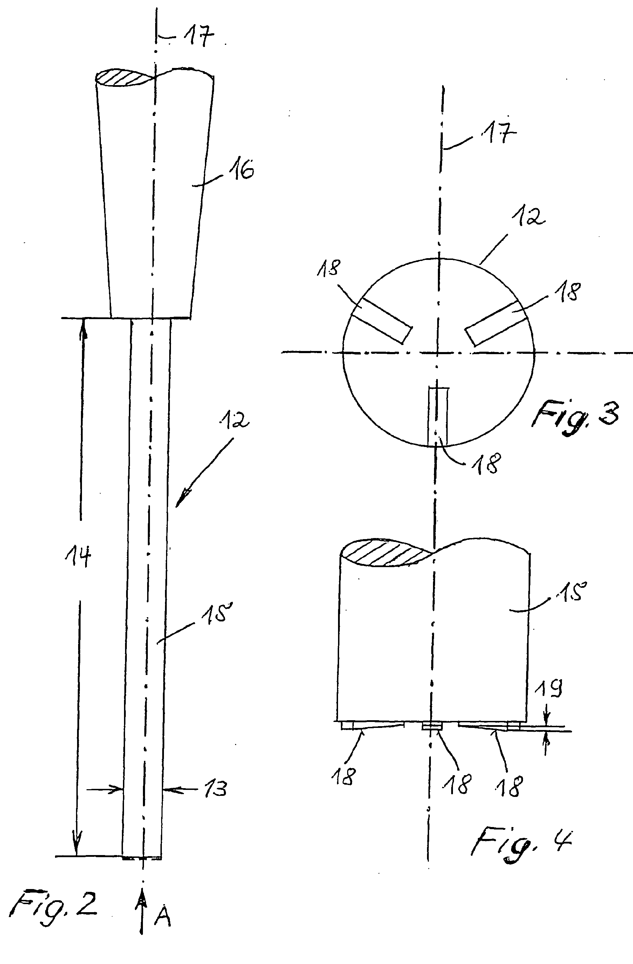

Für das Feindrehfräsen der Lagersitze HL und PL ist ein Fingerfräser 12 vorgesehen (Fig. 2). Im vorliegenden Ausführungsbeispiel beträgt der Durchmesser 13 des Fingerfräsers 24 mm, während die Breite der Hauptlagersitze HL und der Hublagersitze PL 19 mm beträgt. Dementsprechend ist während des Vorformens durch spanabhebende Bearbeitung der Kurbelwelle 1 an jedem Lagersitz beidseitig jeweils ein Freistich von 2,5 mm eingebracht worden, in denen der Fingerfräser 12 auslaufen kann. Im Verhältnis zu seinem Durchmesser 13 hat der Schaft 15 des Fingerfräsers 12 eine große Länge 14. Die große Länge 14 des Schafts 15 macht es möglich, dass beispielsweise die Flächen der Lagersitze der Hublager PL 1 oder PL 4 aus den Richtungen 9 und 11 auch dann bearbeitet werden können, wenn sie sich - nach etwa einer halben Drehung der Kurbelwelle 1 - in der unteren Lage befinden, in welcher die beiden inneren Hublager PL 2 und PL 3 dargestellt sind (Fig. 1). Zu diesem Zweck besitzt der Schaft 15 des Fingerfräsers 12 eine hohe Biegesteifigkeit. Der Schaft 15 steckt in einer üblichen Werkzeugaufnahme 16 der Werkzeugspindel (nicht gezeigt) der Werkzeugmaschine. Die Drehachse 17 des Fingerfräsers 12 liegt zugleich parallel zur X-Richtung der Werkzeugmaschine.

Aus der Richtung des Pfeils A betrachtet weist der Fingerfräser 12 drei Schneidplatten 18 auf, welche gleichmäßig über den Umfang verteilt sind (Fig. 3). Die Schneidplatten 18 bestehen aus kubisch-kristallinem Bornitrid, kurz CBN. Zur Drehachse 17 hin weisen die Stirnschneiden der Schneidplatten 18 jeweils einen geringen Anstellwinkel 19 auf.

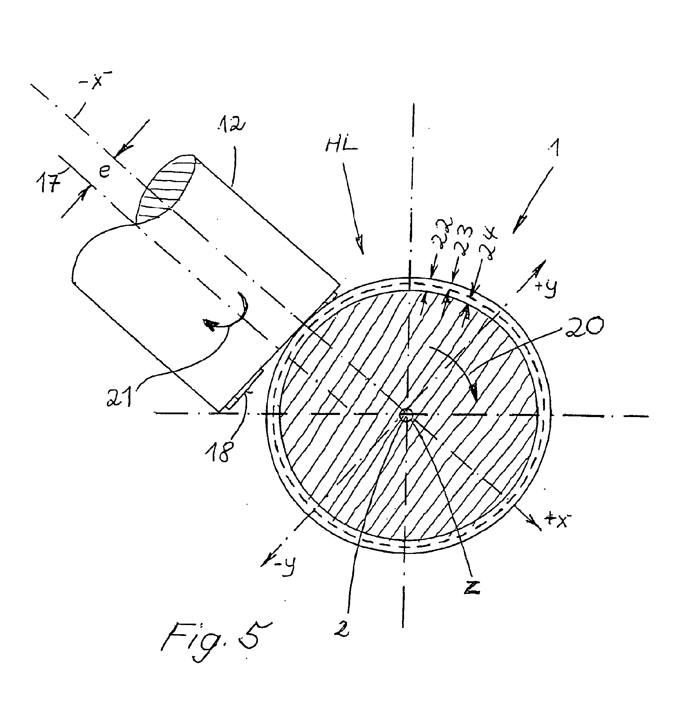

Die Fig. 5 zeigt einen Schnitt durch ein beliebiges Hauptlager HL der Kurbelwelle 1. In Richtung der Drehachse 2 befindet sich die C-Achse der Werkzeugmaschine; die Z-Achse liegt also senkrecht zur Darstellungsebene. Orthogonal dazu erstreckt sich die -X-Achse und wiederum orthogonal zur -X-Achse und zur Z-Achse die Y-Achse (Fig. 1 rechts unten). Gegenüber der X-Achse ist die Drehachse 17 des Fingerfräsers 12 um den Versatz e, der im vorliegenden Ausführungsbeispiel etwa 4 bis 5 mm beträgt, in -Y-Richtung verschoben. Die Drehrichtung der Kurbelwelle 1 wird durch den gekrümmten Pfeil 20 und die Drehrichtung des Fingerfräsers 12 durch den gekrümmten Pfeil 21 angegeben.

Für die mehrstufige spanabhebende Drehfräsbearbeitung des Hauptlagers HL ist das Aufmaß 22 (z.B. 0,25 mm) vorgesehen. Während des Vorschnitt-Drehfräsens, bei dem die Kurbelwelle 1 etwa eine volle Umdrehung in der Richtung 20 macht, wird eine äußere Schicht 23 mit einer vorgegebenen Dicke (Schruppaufmaß z.B. 0,15 mm) vom Hauptlager HL abgetragen. Unmittelbar darauf, d.h. ohne Umspannen der Kurbelwelle 1, erfolgt nach einem Vermessen des Lagers nach dem Vorschnitt-Drehfräsen im Feinschnitt-Drehfräsen das Abtragen der inneren Schicht 24 (Schlichtaufmaß z.B. 0,1 mm), wobei sich die Kurbelwelle 1 wiederum in der Drehrichtung 20 dreht und der Fingerfräser 12 in der Drehrichtung 21. Eine Umkehr der Drehrichtung 20 und 21 für das Feinschnitt-Drehfräsen ist auch möglich. Während des Feinschnitt-Drehfräsens macht die Kurbelwelle 1 etwas mehr als eine volle Umdrehung. Zusammen mit dem Drehwinkelbereich für das Eintauchen des Fingerfräsers 12 zu Beginn der Feinschnitt-Drehfräsbearbeitungsstufe ist der Fingerfräser 12 hier etwa über einen Winkelbereich von 420° im Eingriff.

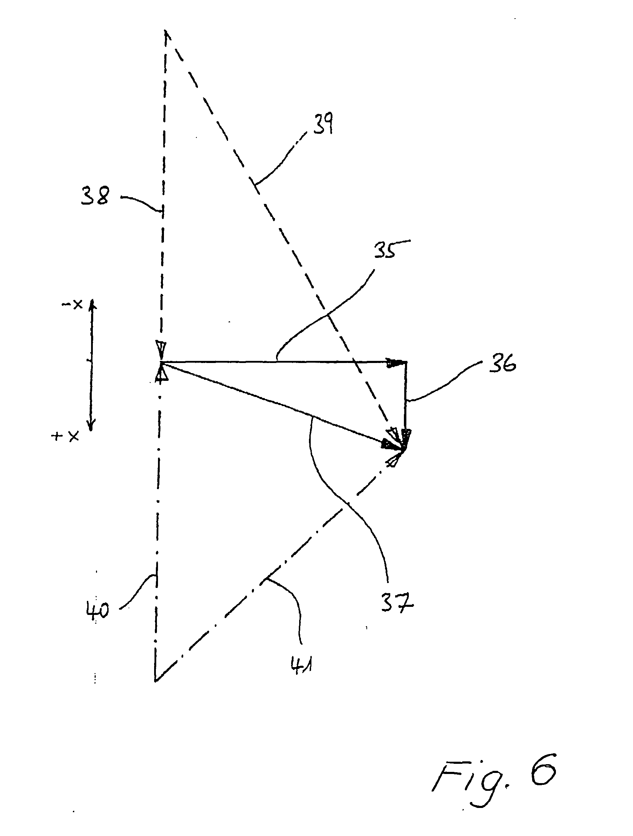

Die Fig. 6 veranschaulicht über eine Vektordarstellung den relativen Vorschub des Fingerfräsers 12 beim Eintauchen (gestrichelt) in das Material, d.h. beim Anschnitt, beim Umlauf (durchgezogen) und beim Austritt (strichpunktiert). Bedingt durch die Geometrie - nur der Durchmesser des Lagersitzes und die Winkelgeschwindigkeit bestimmen den Vektor beim Umlauf - liegt beim Umlauf der Kurbelwelle 1 kein rein tangentialer relativer Vorschub vor; vielmehr ist der tangentialen Komponente 35 eine - übertrieben groß dargestellte - radiale Komponente 36 überlagert, woraus sich während des Umlaufs der Kurbelwelle 1 der als Vektor dargestellte relative Vorschub 37 ergibt. Während des Anschnitts kommt die Zustellbewegung 38 des Fingerfräsers 12 längs dessen Längsachse 17 (in -X-Richtung) hinzu. Der durch Überlagerung mit dem Vektor 37 resultierende relative Vorschub während des Anschnitts ist durch den entsprechenden Anschnitt- bzw. Eintauchvektor 39 veranschaulicht. Während des Austritts des Fingerfräsers 12 nach dem vollständigen Umlauf der Kurbelwelle 1, kommt zu dem relativen Vorschub 37 die - in -X-Richtung erfolgende - Zustellbewegung 40 des Fingerfräsers 12 hinzu. Der durch Überlagerung mit dem Vektor 37 resultierende relative Vorschub während des Austritts des Fingerfräsers 12 ist durch den entsprechenden Austrittsvektor 41 veranschaulicht. Die jeweilige Größe der Zustellbewegungen 38 und 40 wird vorab experimentell ermittelt, wobei die Drehrichtung 20 der Kurbelwelle 1 entweder in oder entgegen der Richtung des Versatzes e der Fräserachse 17 gegenüber der Drehachse 2 der Kurbelwelle 1 zu berücksichtigen ist. Als Anhaltspunkt für die Ermittlung der Größenordnung der zustellgeschwindigkeit in Abhängigkeit von den übrigen Bearbeitungsparametern sowie den geometrischen Verhältnissen kann gelten, daß der Anschnitt sich bevorzugt über einen winkelbereich von 3° bis 15° der Drehung der Kurbelwelle 1 erstreckt. Das gilt für die Haupt- HL und die Pleuellager PL gleichermaßen.

Wie bereits erwähnt, wird die Kurbelwelle 1 bei der mehrstufigen spanabhebenden Drehfräsbearbeitung eines

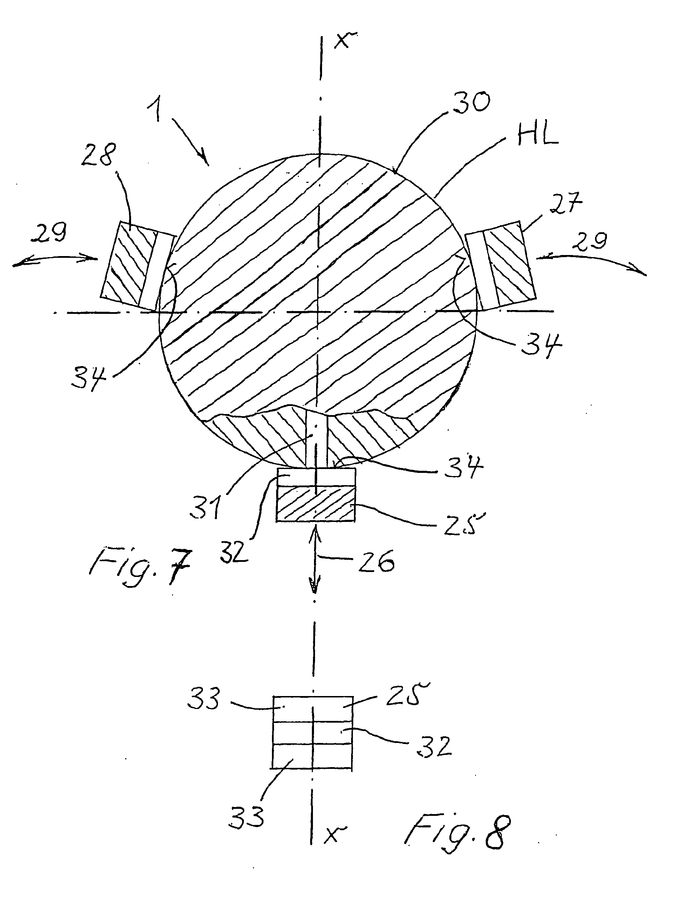

Hauptlagers HL von einer oder zwei Lünetten (nicht gezeigt) der Werkzeugmaschine abgestützt. Das Abstützen erfolgt primär in der X-Richtung, die in der Fig. 7 als vertikale Richtung dargestellt ist. Zum Abstützen dient ein Gleitstein 25, welcher in den beiden Richtungen 26 längs der X-Achse beweglich ist. Neben der Abstützung in der X-Richtung durch den Gleitstein 25 erfolgt zusätzlich noch eine Abstützung durch zwei weitere Gleitsteine 27 und 28, welche jeweils in radialen Richtungen 29 auf den Hauptlagersitz HL der Kurbelwelle 1 zu- und wieder wegbewegt werden können. Ein Mechanismus (nicht gezeigt) der Lünette koordiniert die drei Bewegungen 26 und 29 in der Weise, daß sich die Gleitsteine 27 und 28 auf das Hauptlager HL zubewegen, während sich der Gleitstein 25 in Richtung des Doppelpfeils 26 nach unten bewegt. Umgekehrt bewegen sich die Gleitsteine 27 und 28 in Richtung des Doppelpfeils 29 vom Hauptlager HL weg, während sich der Gleitstein 25 in Richtung des Doppelpfeils 26 nach oben bewegt. Ein an sich bekannter Mechanismus, der hier nicht weiter beschrieben werden braucht, sorgt für die Koordination der Bewegungen 26 und 29, wodurch sich eine zentrische Spannung der Kurbelwelle 1 bei unterschiedlichen Durchmessern der Lagersitze ergibt.

Der Lagersitz 30 des Hauptlagers HL wird aber auch von einer Ölbohrung 31 unterbrochen. Vom Rand dieser Ölbohrung 31 können Störungen ausgehen, die sich beim Rotieren der Kurbelwelle 1 einstellen, während das Hauptlager HL von den Gleitsteinen 25, 27 und 28 abgestützt wird. Zur Vermeidung derartiger Störungen sind die Gleitsteine 25, 27 und 28 jeweils mit einer Nut 32 versehen. Die Nut 32 bewirkt, daß der abstützende Anteil 33 an der gesamten Stützfläche der Gleitsteine 25, 27 und 28 geringer ist als deren jeweilige Querschnittsfläche 34, welche dem Hauptlager HL während der Abstützung zugewandt ist. Nicht dargestellt ist in der Zeichnung die mögliche Anpassung der Gleitsteine an die Mantellinie des zu fertigenden Lagersitzes mittels eines Hohlschliffs (s.o.).

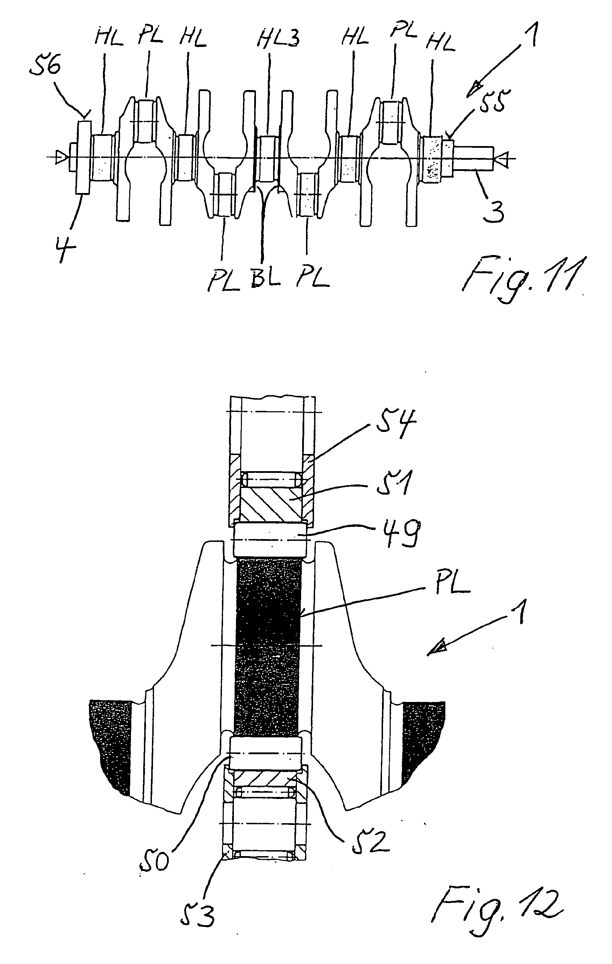

An die vorangegangenen Bearbeitungsoperationen des Vorschnitt- und Fertigschnitt - Drehfräsens schließt sich erfindungsgemäß noch die Operation des Glattwalzens der Lagersitze HL und PL an (Fig. 11 und Fig. 12).

Die Figur 11 zeigt die Lage der bevorzugt glattzuwalzenden Lagersitze HL und PL an einer Kurbelwelle 1. Glattgewalzt werden auch bevorzugt die Bundflächen BL des Passlagers HL 3 einer Kurbelwelle 1; jedoch fällt diese Bearbeitungsoperation nicht mehr unter die vorliegende Erfindung und wir hierin nur der Vollständigkeit halber erwähnt.
Das Glattwalzen der Lagersitze HL und PL erfolgt anstelle von Finishen durch Stein oder Band.

Glattgewalzt wird mit drei zylindrischen Glattwalzröllchen, die über dem Umfang des Lagersitzes PL verteilt sind. In der Fig. 12 sind davon nur die beiden Glattwalzrollen 49 und 50 zu sehen; letztere wurde zum besseren Verständnis in die Zeichnungsebene gerückt. Jede Glattwalzrolle 49 und 50 wird seitlich von jeweils zwei Stützrollen 51 und 52 gestützt, die hier ebenfalls in die Zeichnungsebene verschwenkt sind. Die Stützrollen 51 und 52 sind, wie erkennbar, ihrerseits in Gehäusen 53 bzw. 54 drehbar gelagert. Während des Glattwalzens wird die Kurbelwelle 1 gedreht und versetzt dabei die Glattwalzrollen 49 und 50 in Umdrehung und über die Glattwalzrollen 49 und 50 zugleich die Stützrollen 51 und 52. Beim Glattwalzen werden die Glattwalzrollen 49 und 50 unter einer vorgegebenen Walzkraft auf den Lagersitz PL der Kurbelwelle 1 gedrückt.

Durchs Glattwalzen wird eine verbesserte funktionsgerechte Oberflächencharakteristik der Lagersitze HL und PL erzielt. Die nach dem Feindrehfräsen verbliebene Restrauheit wird verringert. Der Profiltraganteil und die Randschichthärte werden erhöht. Die Torsionsfestigkeit der Kurbelwelle 1 wird gesteigert. Schließlich werden auch eventuelle noch bestehende Formabweichungen reduziert.

Bevorzugt werden an jeder Kurbelwelle 1 auch die Dichtflächen 55 am Zapfen 3 und 56 am Flansch 4 glattgewalzt Fig. 11.

Neben dem Bearbeiten von Kurbelwellen ist das vorstehend beschriebene Verfahren auch dafür geeignet, Nockenwellen und Steuerungswellen aller Art auf die gleiche Weise zu bearbeiten.

## Patentansprüche

1. Verfahren zum Bearbeiten der Lagersitze der Haupt- und Hublager von Kurbelwellen (1), bei dem die Lagersitze der Haupt- (HL) und Hublager (PL) nach dem Urformen der Kurbelwelle (1) durch Schmieden oder Gießen den folgenden Bearbeitungsoperationen unterzogen werden:
- Formen durch spanabhebende Bearbeitung mit bestimmter Schneide,
- Festwalzen aller Hohlkehlen oder Einstiche (42) der Lagersitze,
- Richtwalzen der Kurbelwelle,
- spanabhebende Feinbearbeitung mit einem Fingerfräser (12) jeweils durch Hochgeschwindigkeits-
- Vorschnitt-Drehfräsen und
- Fertigschnitt-Drehfräsen, während jeweils im wesentlichen einer vollständigen Umdrehung der Kurbelwelle (1) ohne Längsvorschub und ohne tangentialen Vorschub des Fingerfräsers (12) und
- Glattwalzen nach dem Fertigschnitt-Drehfräsen.

2. Verfahren nach Anspruch 1,
**dadurch gekennzeichnet,**
**daß** nach dem Vorschnitt-Drehfräsen eine Messung der Durchmesser der Lagersitze (HL, PL) erfolgt und danach in Abhängigkeit von dem Ergebnis der Messung die Zustellung für den Fertigschnitt über die NC-Steuerung der Bearbeitungsmaschine vorgenommen wird.

3. Verfahren nach Anspruch 1 oder Anspruch 2,
**dadurch gekennzeichnet,**
**dass** sich an das Formen durch spanabhebende Bearbeitung mit bestimmter Schneide das Härten wenigstens von Teilen der Kurbelwelle anschließt.

4. Verfahren nach einem der Ansprüche 1 bis 3,
**dadurch gekennzeichnet,**
**dass** die Zustellung des Fingerfräsers (12) während des Eintauchens zu Beginn des Vorschnitt-Drehfräsens und zu Beginn des Fertigschnitt-Drehfräsens bezogen auf die Drehachse (17) des Fingerfräsers (12) allein in Richtung der Drehachse (17) erfolgt.

5. Verfahren nach Anspruch 4,
**dadurch gekennzeichnet,**
**dass** sich der Anschnitt während des Eintauchens des Fingerfräsers (12) auf 3° bis 15°, bevorzugt etwa 5° Drehwinkel der Kurbelwelle (1) erstreckt.

6. Verfahren nach einem der Ansprüche 1 bis 5,
**dadurch gekennzeichnet,**
**dass** während des Formens der Kurbelwelle beidseitig des jeweils zu erzeugenden Lagersitzes ein Freistich eingebracht wird.

7. Verfahren nach einem der Ansprüche 1 bis 6,
**dadurch gekennzeichnet,**
**dass** das Vorschnitt- und Fertigschnitt-Drehfräsen mit einem Versatz (e) der Drehachse (17) des Fingerfräsers (12) zur Drehachse (12) des Lagersitzes von etwa dem 0,15- bis 0,2fachen Wert des Durchmessers des Fingerfräsers (12) erfolgt.

8. Verfahren nach einem der Ansprüche 1 bis 7,
**dadurch gekennzeichnet,**
**dass** die Lagersitze der Hauptlager (HL) bearbeitet werden, indem nacheinander jeder einzelne Lagersitz mit einem einzigen Fingerfräser (12) bearbeitet wird, während die Kurbelwelle (1) gleichzeitig an einem jeweils benachbarten Hauptlager (HL) in radialer Richtung von einer Lünette abgestützt wird.

9. Verfahren nach Anspruch 7 ,
**dadurch gekennzeichnet,**
**dass** die Lagersitze der Hublager (PL) einer Kurbelwelle (1) bearbeitet werden, indem nacheinander jeder einzelne Lagersitz mit einem einzigen Fingerfräser (12) bearbeitet wird, während die Kurbelwelle (1) gleichzeitig an einem jeweils benachbarten Hauptlager (HL) in radialer Richtung von einer Lünette abgestützt wird.

10. Verfahren nach einem der Ansprüche 1 bis 9,
**dadurch gekennzeichnet,**
**dass** das Fertigschnitt-Drehfräsen mehr als 360° Drehwinkel der Kurbelwelle umfasst.

11. Verfahren nach einem der Ansprüche 1 bis 10,
**dadurch gekennzeichnet,**
**dass** der Beginn der spanabhebenden Feinbearbeitung beim Vorschnitt-Drehfräsen und/oder beim Fertigschnitt-Drehfräsen im Bereich einer Ölbohrung erfolgt.

12. Werkzeugmaschine zur Durchführung des Verfahrens nach einem der Ansprüche 1 bis 11,
**dadurch gekennzeichnet,**
**dass** die Werkzeugmaschine
- eine Hauptspindel mit einer Drehachse (C-Achse) um die Z-Achse, entsprechend der Hauptdrehachse (2) einer zu bearbeitenden Kurbelwelle (1),
- zwei in der C-Achse drehbare Spannfutter für die Kurbelwelle (1), von denen wenigstens eines antreibbar ist,
- wenigstens eine um die X-Achse rotierende Werkzeugspindel, die in der Y-Richtung und in der Z-Richtung verfahrbar und in der -X-Richtung zustellbar ist,
- wenigstens eine entlang der Z-Richtung verfahrbare Lünette mit wenigstens einer Abstützung für die Kurbelwelle (1) an einem Lagersitz ihrer Hauptlager (HL) und
- wenigstens eine Einrichtung zum Festwalzen der Hohlkehlen oder Einstiche (42) und zum Richtwalzen der Kurbelwelle (1) mit Hilfe von Festwalzwerkzeugen (43 bis 48) und
- wenigstens eine Einrichtung zum Glattwalzen der Lagersitze von Haupt- (HL) und Hublagern (PL) aufweist.

13. Werkzeugmaschine nach Anspruch 12,
**dadurch gekennzeichnet,**
**dass** das erste Spannfutter eine Kurbelwelle (1) an deren Flansch (4) und das zweite Spannfutter die Kurbelwelle (1) an deren Zapfen (3) aufnimmt.

14. Werkzeugmaschine nach Anspruch 12 oder Anspruch 13,
**dadurch gekennzeichnet,**
**dass** die Werkzeugspindel um einen Betrag e in der Y-Richtung versetzbar ist.

15. Werkzeugmaschine nach einem der Ansprüche 12 bis 14,
**dadurch gekennzeichnet,**
**dass** die Werkzeugspindel zur Aufnahme eines Fingerfräsers (12) vorgesehen ist, dessen Schaft (15) eine Länge im Verhältnis zu seinem Durchmesser (13) hat, die zwischen 10:1,5 bis 10:3 liegt.

16. Werkzeugmaschine nach Anspruch 15,
**dadurch gekennzeichnet,**
**dass** der Fingerfräser (12) drei Stirnschneiden aus aufgelöteten CBN-Schneidplatten (18) aufweist.

17. Werkzeugmaschine nach Anspruch 16,
**dadurch gekennzeichnet,**
**dass** die CBN-Schneidplatten (18) jeweils einen Anstellwinkel (19) aufweisen, der vom Außenumfang des Fingerfräsers (12) zu dessen Längsachse (17) hin um einen Betrag zwischen 0,02° und 0,08° abnimmt.

18. Werkzeugmaschine Anspruch 17,
**dadurch gekennzeichnet,**
**dass** der Fingerfräser einen Durchmesser hat, der den 1,15 bis 1,35-fachen Betrag der Breite des zu bearbeitenden Lagersitzes (HL oder PL) aufweist.

19. Werkzeugmaschine nach einem der Ansprüche 12 bis 18,
**dadurch gekennzeichnet,**
**dass** das Verhältnis der Drehzahlen des bzw. der Spannfutter zur Drehzahl der Werkzeugspindel zwischen 1:400 und 1:2000 beträgt.

20. Werkzeugmaschine nach einem der Ansprüche 12 bis 19,
**dadurch gekennzeichnet,**
**dass** die Abstützung der Lünette an drei Punkten eines Hauptlagers (HL 1-5) einer Kurbelwelle (1) erfolgt, von denen einer in der X-Richtung liegt.

21. Werkzeugmaschine nach Anspruch 20,
**dadurch gekennzeichnet,**
**dass** die Abstützungen der Kurbelwelle (1) durch Lünetten als Gleitsteine (25, 27, 28) ausgebildet sind, welche im Bereich der Ölbohrung (31) des Lagersitzes (30) eines Hauptlagers jeweils eine Aussparung (32) aufweisen.

22. Werkzeugmaschine nach Anspruch 12,
**dadurch gekennzeichnet,**
**dass** sie eine Einrichtung aufweist zum Härten von Hohlkehlen oder Einstiche (42) oder der Lagersitze von Haupt- (HL) und Hublagern (PL).

23. Werkzeugmaschine nach Anspruch 12,
**dadurch gekennzeichnet,**
**dass** die Werkzeugmaschine mindestens eine schwenk- und/oder positionierbare Meßeinrichtung zur Messung der Haupt- (HL) und Hublager (PL) aufweist.

24. Werkzeugmaschine nach Anspruch 23,
**dadurch gekennzeichnet,**
**dass** berührungslose Meßeinrichtungen zur Messung der Haupt- (HL) und Hublager (PL) vorgesehen sind.

## Claims

1. A method for the machining of the bearing seats of the main and pin bearings of crankshafts (1), wherein the bearing seats of the main (HL) and pin bearings (PL) following the moulding of the crankshaft (1) through forging or casting are subjected to the following machining operations:
- forming through chip-removing machining with defined cutting edge,
- deep rolling of all fillets or recesses (42) of the bearing seats,
- straightening rolling of the crankshaft,
- chip-removing fine machining with an end-milling cutter (12) in each case through high-speed
- pre-cut rotary milling and - finish-cut rotary milling during
in each case substantially a complete revolution of the crankshaft (1) without longitudinal feed and without tangential feed of the end-milling cutter (12) and
- smooth rolling following the finish-cut rotary milling.

2. The method according to Claim 1,
**characterized in that**
after the pre-cut rotary milling a measurement of the diameters of the bearing seats (HL, PL) takes place and thereafter as a function of the result of the measurement the feed for the finish cut is performed via the NC-control of the machine tool.

3. The method according to Claim 1 or Claim 2,
**characterized in that**
the forming through chip-removing machining with defined cutting edge is followed by the hardening of at least parts of the crankshaft.

4. The method according to any one of the Claims 1 to 3,
**characterized in that**
the feed of the end-milling cutter (12) during the dipping at the start of the pre-cut rotary milling and at the start of the finish-cut rotary milling based on the rotary axis (17) of the end-milling cutter (12) is solely effected in the direction of the rotary axis (17).

5. The method according to Claim 4,
**characterized in that**
the initial cut during the dipping of the end-milling cutter (12) extends to 3° to 15° preferably approximately 5° rotary angle of the crankshaft (1).

6. The method according to any one of the Claims 1 to 5,
**characterized in that**
during the forming of the crankshaft a clearance cut is introduced on both sides of the respective bearing seat to be produced.

7. The method according to any one of the Claims 1 to 6,
**characterized in that**
the pre-cut and finish-cut rotary milling is carried out with an offset (e) of the rotary axis (17) of the end-milling cutter (12) to the rotary axis (2) of the bearing seat of approximately 0.15 to 0.2 the value of the diameter of the end-milling cutter (12).

8. The method according to any one of the Claims 1 to 7,
**characterized in that**
the bearing seats of the main bearings (HL) are machined **in that** one after the other each individual bearing seat is machined with a single end-milling cutter (12), while the crankshaft (1) is simultaneously supported in radial direction by a steady rest on a neighbouring main bearing (HL) in each case.

9. The method according to Claim 7,
**characterized in that**
the bearing seats of the pin bearings (PL) of a crankshaft (1) are machined **in that** one after the other each individual bearing seat is machined with a single end-milling cutter (12), while the crankshaft (1) is simultaneously supported in radial direction by a steady rest on a neighbouring main bearing (HL) in each case.

10. The method according to any one of the Claims 1 to 9,
**characterized in that**
the finish-cut rotary milling comprises more than 360° rotary angle of the crankshaft.

11. The method according to any one of the Claims 1 to 10,
**characterized in that**
the start of the chip-removing finish machining takes place during the pre-cut rotary milling and/or during the finish-cut rotary milling in the region of an oil bore.

12. A machine tool for carrying out the method according to any one of the Claims 1 to 11,
**characterized in that**
the machine tool comprises
- a main spindle with a rotary axis (C-axis) about the Z-axis, corresponding to the main rotary axis (2) of a crankshaft (1) to be machined,
- two chucks for the crankshaft (1) rotatable in the C-axis of which at least one is driveable,
- at least one tool spindle rotating about the X-axis, which can be moved in the Y-direction and in the Z-direction and is feedable in the X-direction,
- at least one steady rest moveable along the Z-direction with at least one support for the crankshaft (1) on a bearing seat of its main bearing (HL) and
- at least one device for the deep rolling of the fillets or recesses (42) and for the straightening rolling of the crankshaft (1) with the help of deep rolling tools (43 to 48) and
- at least one device for the smooth rolling of the bearing seats of main (HL) and pin bearings (PL).

13. The machine tool according to Claim 12,
**characterized in that**
the first chuck accommodates a crankshaft (1) by its flange (4) and the second chuck accommodates the crankshaft (1) by its pin (3).

14. The machine tool according to Claim 12 or 13,
**characterized in that**
the tool spindle can be repositioned in the Y-direction by an amount e.

15. The machine tool according to any one of the Claims 12 to 14,
**characterized in that**
the tool spindle is provided for accommodating an end-milling cutter (12) whose shank (15) has a length in the ratio to its diameter (13) that lies between 10:1.5 to 10:3.

16. The machine tool according to Claim 15,
**characterized in that**
the end-milling cutter (12) has three face cutting edges of brazed-on CBN cutting inserts (18).

17. The machine tool according to Claim 16,
**characterized in that**
the CBN cutting inserts (18) each have a setting angle (19) which from the outer circumference of the end-milling cutter (12) to its longitudinal axis (17) decreases by an amount between 0.02° and 0.08°.

18. The machine tool according to Claim 17,
**characterized in that**
the end-milling cutter has a diameter that is 1.15 to 1.35 the amount of the width of the bearing seat (HL or PL) to be machined.

19. The machine tool according to any one of the Claims 12 to 18,
**characterized in that**
the ratio of the rotating speeds of the chuck or chucks to the rotating speed of the tool spindle amounts to between 1:400 and 1:2000.

20. The machine tool according to any one of the Claims 12 to 19,
**characterized in that**
the support of the steady rest takes place in three locations of a main bearing (HL 1-5) of a crankshaft (1) of which one lies in the X-direction.

21. The machine tool according to Claim 20,
**characterized in that**
the supports of the crankshaft (1) are formed through steady rests as sliding blocks (25, 27, 28), which in the region of the oil bore (31) of the bearing seat (30) of a main bearing each have a clearance (32).

22. The machine tool according to Claim 12,
**characterized in that**
it comprises a device for the hardening of fillets or recesses (42) or the bearing seats of main (HL) and pin bearings (PL).

23. The machine tool according to Claim 12,
**characterized in that**
the machine tool comprises at least one pivotable and/or positionable measuring device for the measuring of the main (HL) and pin bearings (PL).

24. The machine tool according to Claim 23,
**characterized in that**
contactless measuring devices for the measurement of the main (HL) and pin bearings (PL) are provided.

## Revendications

1. Procédé pour traiter les sièges de palier des paliers principaux et paliers de levage de vilebrequins (1), dans lequel les sièges de palier des paliers principaux (HL) et des paliers de levage (PL) sont soumis aux opérations d'usinage suivantes après le formage d'origine du vilebrequin (1) par forgeage ou coulée :
- formage par usinage avec enlèvement de copeaux avec lame définie,
- laminage fixe de toutes les gorges creuses ou entailles (42) des sièges de palier,
- dressage du vilebrequin,
- usinage fin par enlèvement de copeaux avec une fraise à queue (12) à chaque fois par
- fraisage-tournage à précoupe à vitesse élevée et
- fraisage-tournage à coupe finie à haute vitesse, pendant
à chaque fois sensiblement une rotation complète du vilebrequin (1) sans avancement longitudinal et sans avancement tangentiel de la fraiseuse à queue (12) et
- polissage au laminoir après le fraisage-tournage à coupe finie.

2. Procédé selon la revendication 1,
**caractérisé en ce que**
une mesure des diamètres des sièges de palier (HL, PL) s'effectue après le fraisage-tournage à précoupe et ensuite l'avancement pour la coupe finie est effectué par la commande numérique de la machine d'usinage en fonction du résultat de la mesure.

3. Procédé selon la revendication 1 ou la revendication 2,
**caractérisé en ce que**
le durcissement au moins de parties du vilebrequin fait suite au formage par usinage avec enlèvement de copeaux avec une lame définie.

4. Procédé selon l'une quelconque des revendications 1 à 3,
**caractérisé en ce que**
l'avancement de la fraiseuse à queue (12) s'effectue pendant l'immersion au début du fraisage-tournage à précoupe et au début du fraisage-tournage à coupe finie par rapport à l'axe de rotation (17) de la fraiseuse à queue (12) uniquement en direction de l'axe de rotation (17).

5. Procédé selon la revendication 4,
**caractérisé en ce que**
l'attaque s'étend pendant l'immersion de la fraiseuse à queue (12) sur 3° à 15°, de préférence environ 5° d'angle de rotation du vilebrequin (1).

6. Procédé selon l'une quelconque des revendications 1 à 5,
**caractérisé en ce que**
une rainure de dégagement est introduite pendant le formage du vilebrequin des deux côtés du siège de palier à générer respectivement.

7. Procédé selon l'une quelconque des revendications 1 à 6,
**caractérisé en ce que**
le fraisage-tournage à précoupe et le fraisage-tournage à coupe finie s'effectuent avec un déport (e) de l'axe de rotation (17) de la fraiseuse à queue (12) par rapport à l'axe de rotation (2) du siège de palier égal à environ 0,15 à 0,2 fois la valeur du diamètre de la fraiseuse à queue (12).

8. Procédé selon l'une quelconque des revendications 1 à 7,
**caractérisé en ce que**
les sièges de palier des paliers principaux (HL) sont usinés en usinant successivement chaque siège de palier individuel avec une seule fraiseuse à queue (12), alors que le vilebrequin (1) est soutenu simultanément sur un palier principal (HL) respectivement voisin dans le sens radial par une lunette.

9. Procédé selon la revendication 7,
**caractérisé en ce que**
les sièges de palier des paliers de levage (PL) d'un vilebrequin (1) sont usinés, du fait que successivement chaque siège de palier individuel est usiné avec une seule fraiseuse à queue (12), alors que le vilebrequin (1) est soutenu simultanément sur un palier principal (HL) respectivement voisin dans le sens radial par une lunette.

10. Procédé selon l'une quelconque des revendications 1 à 9,
**caractérisé en ce que**
le fraisage-tournage à coupe finie comprend plus de 360° d'angle de rotation du vilebrequin.

11. Procédé selon l'une quelconque des revendications 1 à 10,
**caractérisé en ce que**
le début de l'usinage fin avec enlèvement de copeaux s'effectue lors du fraisage-tournage à précoupe et/ou lors du fraisage-tournage à coupe finie dans la zone d'un alésage d'huile.

12. Machine-outil pour mettre en oeuvre le procédé selon l'une quelconque des revendications 1 à 11,
**caractérisée en ce que**
la machine-outil présente
- une broche principale avec un axe de rotation (axe C) autour de l'axe Z, en fonction de l'axe de rotation principal (2) d'un vilebrequin (1) à usiner,
- deux mandrins de serrage pouvant tourner dans l'axe C pour le vilebrequin (1), dont au moins l'un peut être entraîné,
- au moins une broche d'outil tournant autour de l'axe X, qui peut être déplacée dans la direction Y et dans la direction Z et peut être amenée dans la direction X,
- au moins une lunette coulissant le long de la direction Z avec au moins un soutien pour le vilebrequin (1) sur un siège de palier de ses paliers principaux (HL) et
- au moins un dispositif pour le laminage fixe des gorges creuses ou des entailles (42) et pour le dressage du vilebrequin (1) à l'aide d'outils de laminage fixe (43 à 48) et
- au moins un dispositif pour le polissage au laminage des sièges de palier des paliers principaux (HL) et des paliers de levage (PL).

13. Machine-outil selon la revendication 12,
**caractérisée en ce que**
le premier mandrin de serrage reçoit un vilebrequin (1) sur sa bride (4) et le second mandrin de serrage le vilebrequin (1) sur son tenon (3).

14. Machine-outil selon la revendication 12 ou la revendication 13,
**caractérisée en ce que**
la broche d'outil peut être déplacée d'une valeur e dans la direction Y.

15. Machine-outil selon l'une quelconque des revendications 12 à 14,
**caractérisée en ce que**
la broche d'outil est prévue pour le logement d'une fraiseuse à queue (12), dont la tige (15) a une longueur par rapport à son diamètre (13) qui se situe entre 10:1,5 et 10:3.

16. Machine-outil selon la revendication 15,
**caractérisée en ce que**
la fraiseuse à queue (12) présente trois lames avant à base de plaques de coupe CBN (18) soudées dessus.

17. Machine-outil selon la revendication 16,
**caractérisée en ce que**
les plaques de coupe CBN (18) présentent chacune un angle d'attaque (19) qui décroît d'une valeur comprise entre 0,02° et 0,08° depuis le pourtour extérieur de la fraiseuse à queue (12) en direction de son axe longitudinal (17).

18. Machine-outil selon la revendication 17,
**caractérisée en ce que**
la fraiseuse à queue présente un diamètre qui correspond à 1,15 jusqu'à 1,35 fois la largeur du siège de palier (HL ou PL) à usiner.

19. Machine-outil selon l'une quelconque des revendications 12 à 18,
**caractérisée en ce que**
le rapport entre les régimes du mandrin ou des mandrins de serrage et le régime de la broche d'outil se situe entre 1:400 et 1:2000.

20. Machine-outil selon l'une quelconque des revendications 12 à 19,
**caractérisée en ce que**
le soutien de la lunette s'effectue en trois points d'un palier principal (HL 1-5) d'un vilebrequin (1), dont l'un se situe dans la direction X.

21. Machine-outil selon la revendication 20,
**caractérisée en ce que**
les soutiens du vilebrequin (1) par des lunettes sont conçus sous forme de coulisseaux (25, 27, 28), qui présentent chacun un évidement (32) dans la zone de l'alésage d'huile (31) du siège de palier (30).

22. Machine-outil selon la revendication 12,
**caractérisée en ce que**
elle présente un dispositif pour le durcissement de gorges creuses ou d'entailles (42) ou des sièges de palier de paliers principaux (HL) et de paliers de levage (PL).

23. Machine-outil selon la revendication 12,
**caractérisée en ce que**
la machine-outil présente au moins un dispositif de mesure pouvant basculer et/ou pouvant être positionné pour la mesure des paliers principaux (HL) et des paliers de levage (PL).

24. Machine-outil selon la revendication 23,
**caractérisée en ce que**
des dispositifs de mesure sans contact sont prévus pour la mesure des paliers principaux (HL) et des paliers de levage (PL).
